# EUROPEAN PATENT SPECIFICATION

(11) **EP 3 509 399 B1**
(45) Date of publication and mention of the grant of the patent: **14.12.2022**
(21) Application number: 17845951.7
(22) Date of filing: 24.07.2017
(51) Int. Cl.: H05B 6/12

(54) **INDUCTION HEATING COOKER**
INDUKTIONSERWÄRMUNGSHERD
CUISINIÈRE CHAUFFANTE À INDUCTION

(30) Priority: 30.08.2016 JP 2016167913
(43) Date of publication of application: 10.07.2019
(73) Proprietor: Panasonic Intellectual Property Management Co., Ltd., Osaka-shi, Osaka 540-6207 (JP)
(72) Inventor: OGAWA, Kenji, Osaka-shi, Osaka 540-6207 (JP); WATANABE, Noriaki, Osaka-shi, Osaka 540-6207 (JP); TAKENAKA, Kazuhiko, Osaka-shi, Osaka 540-6207 (JP)
(74) Representative: SSM Sandmair
(86) International application number: PCT/JP2017/026623
(87) International publication number: WO 2018/042941

(56) References cited:
- EP-A1- 2 613 608
- EP-A1- 2 846 607
- WO-A1-2011/107325
- WO-A1-2014/199597
- US-A1- 2013 248 517
- US-A1- 2013 248 517
- US-A1- 2016 021 708

## Description

### TECHNICAL FIELD

The present disclosure relates to an induction heating cooker provided with a plurality of heating coils.

### BACKGROUND ART

Conventionally, in an induction heating cooker, it has been difficult to use a pot with a size larger than a heating zone determined by a size of one heating coil.

Recent patent applications include those disclosing an induction heating cooker for heating one pot with a plurality of heating coils (for example, see unexamined Japanese Patent Publication No. 2014-175303 and WO 2015/015373 A.

An induction heating cooker disclosed in unexamined Japanese Patent Publication No. 2014-175303 has two heating coils disposed adjacent to each other and having an elliptical shape in a plan view. In this induction heating cooker, two heating coils are driven according to a placement condition of a pot. An induction heating cooker disclosed in WO 2015/015373 A has: two heating zones, each of which includes a plurality of heating coils; and one auxiliary heating coil disposed between these two heating zones.

The induction heating cooker disclosed in Unexamined Japanese Patent Publication No. 2014-175303 simultaneously drives two heating coils for heating one pot. Therefore, two heating coils function as a single heating zone. In the induction heating cooker disclosed in WO 2015/015373 A, the auxiliary heating coil is not driven alone but always driven together with either of two heating zones.

US 2013/248517 A1 describes an induction heating cooking apparatus and a control method thereof. A vessel can be effectively heated by using a plurality of heating coils regardless of a position of the vessel. By connecting a plurality of heating coils to a smaller amount of inverters through relays, only a heating coil on which a vessel is placed, among the plurality of heating coils, can be heated. Also, by connecting the heating coils in series, a current flowing in the heating coil can be lowered, and thus, a rated current of the inverter can be lowered. Also, by connecting relays and heating coils such that a larger amount of heating coils are operated, while minimizing the amount of inverters, manufacturing cost can be reduced, operation efficiency can be increased, and stability of the cooking apparatus can be enhanced.

EP 2 846 607 A1 describes an induction cooking hob which includes at least one cooking area, wherein the cooking area comprises at least three induction coils. The induction coils of at least one cooking area are arranged side-by-side and in series. Each induction coil of at least one cooking area has an elongated shape. The longitudinal axes of the induction coils within one cooking area are arranged in parallel. Each induction coil of the cooking area is associated with a dedicated induction generator. The induction generators are connected or connectable to at least one current line. The induction generators are connected to and controlled or controllable by at least one control unit. Requested powers for each used induction generator are adjusted or adjustable independent from each other by a user interface. Instant powers of the induction generators within a cycle pattern are controlled or controllable independent from each other by the control unit. Further, it is described a method for controlling a cooking area.

### SUMMARY OF THE INVENTION

The invention is defined by the subject-matter of independent claim 1. The dependent claims are directed to advantageous embodiments.

### ADVANTAGES OF THE INVENTION

Advantageously, it is provided an induction heating cooker capable of appropriately changing a position and a size of a heating zone according to a position and a size of a placed pot.

Advantageously, an induction heating cooker includes a top plate on which an object to be heated is placed, a first heating coil unit and a second heating coil unit that are provided adjacent to each other below the top plate, and a controller configured to control the first heating coil unit and the second heating coil unit.

The invention is achieved with the features of claim 1. Dependent claims correspond to preferred embodiments.

The first heating coil unit has a first heating coil, a second heating coil, and a first inverter. The second heating coil unit has a third heating coil, a fourth heating coil, and a second inverter.

The first to fourth heating coils have an elliptical shape having a major axis and a minor axis in a plan view.

The first and second heating coils have the major axis oriented in a first direction and are disposed adjacent to each other in a direction of the minor axis. The third and fourth heating coils have the major axis oriented in a second direction orthogonal to the first direction and are disposed adjacent to each other in a direction of the minor axis.

The first inverter is configured to supply a high frequency current to the first and second heating coils. The second inverter is configured to supply a high frequency current to the third and fourth heating coils.

According to this aspect, by driving a heating coil above which a pot is placed, a position and a size of a heating zone can be appropriately changed according to a position and a size of the placed pot.

### BRIEF DESCRIPTION OF DRAWINGS

FIG. 1 is an exploded perspective view of an induction heating cooker according to a first exemplary embodiment.
FIG. 2 is a plan view of the induction heating cooker according to the first exemplary embodiment as seen through a top plate.
FIG. 3 is a block diagram of the induction heating cooker according to the first exemplary embodiment.
FIG. 4 is an exploded perspective view of an induction heating cooker according to a second exemplary embodiment.
FIG. 5 is a plan view of the induction heating cooker according to the second exemplary embodiment as seen through a top plate.
FIG. 6 is an exploded perspective view of an induction heating cooker according to a third exemplary embodiment.
FIG. 7 is a plan view of the induction heating cooker according to the third exemplary embodiment as seen through a top plate.
FIG. 8 is an exploded perspective view of an induction heating cooker according to a fourth exemplary embodiment.
FIG. 9A is a plan view of the induction heating cooker according to the fourth exemplary embodiment as seen through a top plate.
FIG. 9B is a plan view of an induction heating cooker, as seen through a top plate, according to a modification of the fourth exemplary embodiment.
FIG. 9C is a plan view of an induction heating cooker, as seen through a top plate, according to a modification of the fourth exemplary embodiment.
FIG. 10A is a plan view schematically illustrating a condition where a pot is placed across a plurality of sections.
FIG. 10B is a view illustrating a display on a display unit for indicating the condition illustrated in FIG. 10A.
FIG. 11A is a plan view schematically illustrating a condition where a pot is placed across a plurality of sections.
FIG. 11B is a view illustrating a display on a display unit for indicating the condition illustrated in FIG. 11A.
FIG. 12A is a schematic plan view for describing conditions where pots of various sizes are placed across a plurality of sections.
FIG. 12B is a schematic plan view for describing conditions where pots of various sizes are placed across a plurality of sections.
FIG. 12C is a schematic plan view for describing conditions where pots of various sizes are placed across a plurality of sections.
FIG. 12D is a schematic plan view for describing conditions where pots of various sizes are placed across a plurality of sections.
FIG. 12E is a schematic plan view for describing conditions where pots of various sizes are placed across a plurality of sections.
FIG. 12F is a schematic plan view for describing conditions where pots of various sizes are placed across a plurality of sections.
FIG. 12G is a schematic plan view for describing conditions where pots of various sizes are placed across a plurality of sections.
FIG. 12H is a schematic plan view for describing conditions where pots of various sizes are placed across a plurality of sections.
FIG. 12I is a schematic plan view for describing conditions where pots of various sizes are placed across a plurality of sections.
FIG. 12J is a schematic plan view for describing conditions where pots of various sizes are placed across a plurality of sections.
FIG. 12K is a schematic plan view for describing conditions where pots of various sizes are placed across a plurality of sections.
FIG. 12L is a schematic plan view for describing conditions where pots of various sizes are placed across a plurality of sections.
FIG. 13A is a plan view schematically illustrating a condition where two pots of different sizes are placed across a plurality of sections.
FIG. 13B is a plan view schematically illustrating a condition where two pots of different sizes are placed across a plurality of sections.
FIG. 13C is a plan view schematically illustrating a condition where two pots of different sizes are placed across a plurality of sections.
FIG. 13D is a plan view schematically illustrating a condition where two pots of different sizes are placed across a plurality of sections.
FIG. 13E is a plan view schematically illustrating a condition where two pots of different sizes are placed across a plurality of sections.
FIG. 13F is a plan view schematically illustrating a condition where two pots of different sizes are placed across a plurality of sections.
FIG. 13G is a plan view schematically illustrating a condition where two pots of different sizes are placed across a plurality of sections.
FIG. 13H is a plan view schematically illustrating a condition where two pots of different sizes are placed across a plurality of sections.
FIG. 13I is a plan view schematically illustrating a condition where two pots of different sizes are placed across a plurality of sections.
FIG. 14A is a view schematically illustrating a condition where a pot is placed across two sections.
FIG. 14B is a view schematically illustrating a condition where a pot is placed across two sections.
FIG. 15 is a flowchart illustrating heating control when a pot is placed across two sections.

### DESCRIPTION OF EMBODIMENTS

An induction heating cooker according to a first aspect of the present disclosure includes a top plate on which an object to be heated is placed, a first heating coil unit and a second heating coil unit that are provided adjacent to each other below the top plate, and a controller configured to control the first heating coil unit and the second heating coil unit.

The first heating coil unit has a first heating coil, a second heating coil, and a first inverter. The second heating coil unit has a third heating coil, a fourth heating coil, and a second inverter.

The first to fourth heating coils have an elliptical shape having a major axis and a minor axis in a plan view.

The first and second heating coils have the major axis oriented in a first direction and are disposed adjacent to each other in a direction of the minor axis. The third and fourth heating coils have the major axis oriented in a second direction orthogonal to the first direction and are disposed adjacent to each other in a direction of the minor axis.

The first inverter is configured to supply a high frequency current to the first and second heating coils. The second inverter is configured to supply a high frequency current to the third and fourth heating coils.

According to a second aspect of the present disclosure, in the induction heating cooker in the first aspect, the first heating coil unit is provided adjacent to the third heating coil in the second heating coil unit.

According to a third aspect of the present disclosure, in the induction heating cooker in the first aspect, the second direction is a depth direction of the top plate.

According to a fourth aspect of the present disclosure, in the induction heating cooker in the first aspect, the first heating coil unit has a first switching unit provided between the first heating coil and the first inverter, and a second switching unit provided between the second heating coil and the first inverter.

The second heating coil unit has a third switching unit provided between the third heating coil and the second inverter, and a fourth switching unit provided between the fourth heating coil and the second inverter.

According to a fifth aspect of the present disclosure, in the induction heating cooker in the first aspect, the first heating coil unit has a temperature sensor provided between the first heating coil and the second heating coil. The second heating coil unit has a temperature sensor provided between the third heating coil and the fourth heating coil.

According to a sixth aspect of the present disclosure, the induction heating cooker in the first aspect further includes a third heating coil unit that is provided adjacent to the second heating coil unit below the top plate and is controlled by the controller.

The third heating coil unit has a fifth heating coil, a sixth heating coil, and a third inverter. The fifth and sixth heating coils have an elliptical shape having a major axis and a minor axis in a plan view. The fifth and sixth heating coils have the major axis oriented in the first direction and are disposed adjacent to each other in a direction of the minor axis. The third inverter is configured to supply a high frequency current to the fifth and sixth heating coils.

According to a seventh aspect of the present disclosure, in the induction heating cooker in the sixth aspect, the third heating coil unit is provided adjacent to the fourth heating coil in the second heating coil unit.

According to an eighth aspect of the present disclosure, in the induction heating cooker in the sixth aspect, the third heating coil unit has a fifth switching unit provided between the fifth heating coil and the third inverter, and a sixth switching unit provided between the sixth heating coil and the third inverter.

According to a ninth aspect of the present disclosure, in the induction heating cooker in the sixth aspect, the third heating coil unit has a temperature sensor provided between the fifth heating coil and the sixth heating coil.

An induction heating cooker according to exemplary embodiments will be described below with reference to the accompanying drawings.

In all of the following drawings, identical or equivalent parts are given identical reference signs, and repeated description will be omitted.

### (First exemplary embodiment)

### <Overall configuration>

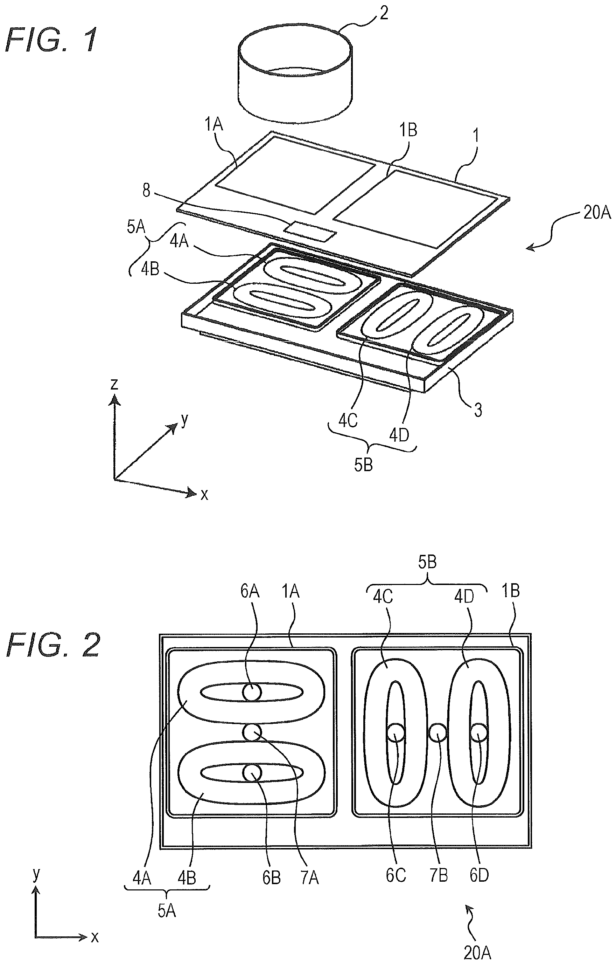

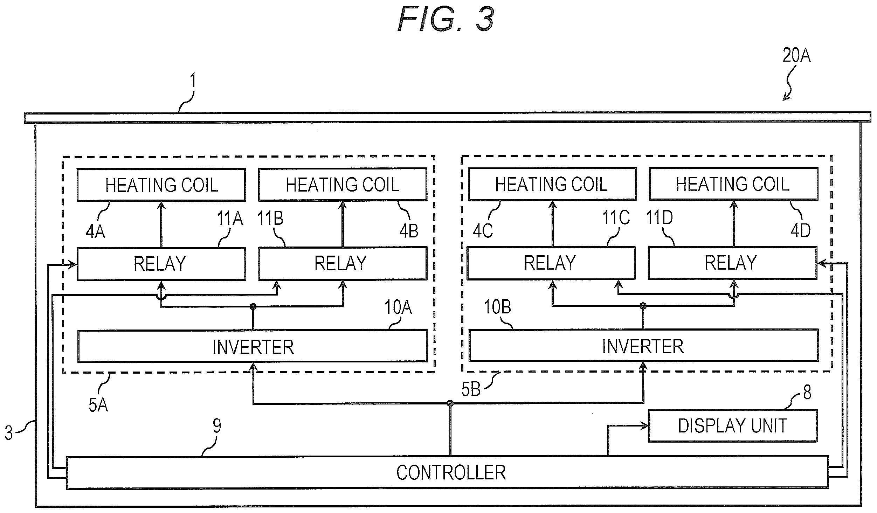

FIG. 1 is an exploded perspective view illustrating induction heating cooker 20A according to a first exemplary embodiment of the present disclosure. FIG. 2 is a plan view of induction heating cooker 20A as seen through top plate 1. This plan view illustrates an arrangement of heating coil units 5A, 5B illustrated in FIG. 1. FIG. 3 is a block diagram of induction heating cooker 20A according to the first exemplary embodiment.

As illustrated in FIGS. 1 to 3, induction heating cooker 20A has top plate 1 and housing 3.

Heating coil unit 5A, heating coil unit 5B, and controller 9 are provided inside housing 3.

Top plate 1 covers housing 3 from above and is configured such that pot 2 serving as an object to be heated is placed thereon. For example, top plate 1 is made of glass.

Heating coil units 5A, 5B are disposed below top plate 1 and configured to inductively heat pot 2 placed on top plate 1. Controller 9 controls heating coil units 5A, 5B.

In the present disclosure, in a horizontal plane parallel to top plate 1, a direction from left to right is defined as an x direction and a depth direction from a front side is defined as a y direction, as illustrated in FIG. 1. A vertical direction from bottom to top with respect to top plate 1 is defined as a z direction.

Induction heating cooker 20A has sections 1A, 1B on top plate 1. Section 1A is located above heating coil unit 5A, and section 1B is located above heating coil unit 5B.

According to induction heating cooker 20A, when pot 2 is placed across heating coil units 5A, 5B, heating coil units 5A, 5B are driven together to form one heating zone. Heating coil units 5A, 5B can also be used individually.

In the following, for simplicity, a description that should be expressed as "a pot is placed on top plate 1 above a heating coil", for example, will be expressed as "a pot is placed above a heating coil".

Respective elements of induction heating cooker 20A will now be described.

### <Heating coil unit>

Heating coil unit 5A has heating coils 4A, 4B, inverter 10A, and relays 11A, 11B. Heating coils 4A, 4B have an approximately elliptical shape with a major axis and a minor axis in a plan view, the major axis being oriented in a first direction (x direction). Heating coils 4A, 4B are disposed adjacent to each other in a direction of the minor axis (y direction).

In heating coil unit 5A, relay 11A is turned on or off by controller 9 to connect or disconnect a path between inverter 10A and heating coil 4A. Relay 11B is turned on or off by controller 9 to connect or disconnect a path between inverter 10A and heating coil 4B.

Heating coil unit 5B has heating coils 4C, 4D, inverter 10B, and relays 11C, 11D. Heating coils 4C, 4D have an approximately elliptical shape with a major axis and a minor axis in a plan view, the major axis being oriented in a second direction (y direction). Heating coils 4C, 4D are disposed adjacent to each other in a direction of the minor axis (x direction).

In heating coil unit 5B, relay 11C is turned on or off by controller 9 to connect or disconnect a path between inverter 10B and heating coil 4C. Relay 11D is turned on or off by controller 9 to connect or disconnect a path between inverter 10B and heating coil 4D.

In the present exemplary embodiment, heating coil units 5A, 5B correspond to first and second heating coil units, respectively. Relays 11A to 11D correspond to first to fourth switching units, respectively.

### <Inverter>

Inverter 10A is connected to heating coil 4A through relay 11A for supplying a high frequency current to heating coil 4A under control of controller 9. Inverter 10A is connected to heating coil 4B through relay 11B for supplying a high frequency current to heating coil 4B under control of controller 9.

Inverter 10B is connected to heating coil 4C through relay 11C for supplying a high frequency current to heating coil 4C under control of controller 9. Inverter 10B is connected to heating coil 4D through relay 11D for supplying a high frequency current to heating coil 4D under control of controller 9.

Inverters 10A, 10B may be connected to three or more heating coils.

In the present exemplary embodiment, inverters 10A, 10B correspond to first and second inverters, respectively.

### <Heating coil>

As described above, heating coils 4A to 4D have an approximately elliptical shape in a plan view. In the present exemplary embodiment, an elliptical shape is not limited to a typical ellipse having two focal points. The elliptical shape is only required to have at least a major axis and a minor axis, for example, and may have an outer shape having a straight part. However, it is preferable that heating coils 4A to 4D have a rounded outer shape without having sharp corners as a whole.

As described above, due to heating coils 4A to 4D having an elliptical shape, an output can be increased to improve heating efficiency, as compared to a configuration of using two circular coils.

Heating coils 4A, 4B have a major axis oriented in the x direction. Heating coils 4C, 4D have a major axis oriented in the y direction. That is, the major axes of heating coils 4A, 4B are orthogonal to the major axes of heating coils 4C, 4D. This arrangement enables heating using a single heating coil unit and heating achieved by driving two heating coil units together.

Specifically, in a case where pot 2 is placed on top plate 1 so as to cover heating coil unit 5A and a part of heating coil unit 5B, pot 2 can be heated by using heating coils 4A, 4B in heating coil unit 5A and heating coil 4C in heating coil unit 5B. Thus, a size of a heating zone can be changed as appropriate according to a size of a pot.

In the present exemplary embodiment, heating coils 4A to 4D correspond to first to fourth heating coils, respectively.

### <Temperature sensor>

Induction heating cooker 20A has a plurality of temperature sensors (thermistors, infrared sensors) for directly or indirectly measuring a temperature of pot 2.

As illustrated in FIG. 2, thermistor 6A, thermistor 6B, thermistor 6C, and thermistor 6D are respectively provided at centers of heating coils 4A, 4B, 4C, 4D. Infrared sensors 7A, 7B are provided between heating coil 4A and heating coil 4B and between heating coil 4C and heating coil 4D, respectively.

Two types of infrared sensors having different detectable ranges from each other may be used for infrared sensors 7A, 7B. For example, infrared sensor 7A disposed between heating coils 4A, 4B may have a detectable range with a lower limit value of 70°C. Infrared sensor 7B disposed between heating coils 4C, 4D may have a detectable range with a lower limit value of 140°C.

A temperature sensor may be provided between heating coil units 5A, 5B. Due to the temperature sensors, even when pot 2 is placed across heating coils units 5A, 5B, the temperature of pot 2 can more accurately be detected.

Thermistor 6A may be provided near an outer circumference of heating coil 4A opposite to heating coil 4B. Thermistor 6B may be provided near the outer circumference of heating coil 4B opposite to heating coil 4A. Thermistor 6C may be provided near the outer circumference of heating coil 4C opposite to heating coil 4D. Thermistor 6D may be provided near the outer circumference of heating coil 4D opposite to heating coil 4C.

### <Display unit>

Induction heating cooker 20A has display unit 8 provided to top plate 1. Display unit 8 is controlled by controller 9 and lights up an area corresponding to a heating coil above which pot 2 is placed, when display unit 8 is regarded as top plate 1.

In a case where one pot is placed across a plurality of heating coils or in a case where a plurality of pots are separately placed above a plurality of heating coil units, display unit 8 lights up an area corresponding to heating coils above which pot 2 is placed so as to allow a user to recognize a difference in these cases.

### <Modification>

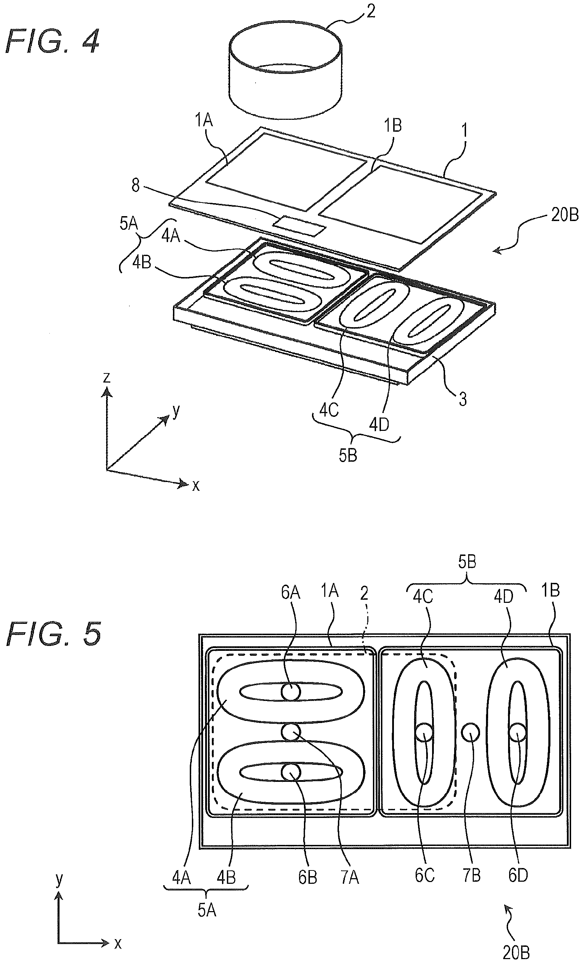

FIG. 4 is an exploded perspective view illustrating induction heating cooker 20B according to a modification of the present exemplary embodiment. FIG. 5 is a plan view of induction heating cooker 20B as seen through top plate 1. A dotted line in FIG. 5 indicates that pot 2 is placed across sections 1A, 1B.

As illustrated in FIGS. 4 and 5, induction heating cooker 20B has substantially the same configuration as the configuration of induction heating cooker 20A. A difference between induction heating cooker 20B and induction heating cooker 20A is that a space between heating coil 4C and heating coil 4D in induction heating cooker 20B is wider than the corresponding space in induction heating cooker 20A.

Due to heating coil 4C and heating coil 4D being apart from each other, pot 2 hardly reaches an area above heating coil 4D, even when pot 2 is placed across heating coil units 5A, 5B. If two pots are independently heated by heating coils 4C, 4D, the present modification can suppress interference between heating operations for two pots.

### (Second exemplary embodiment)

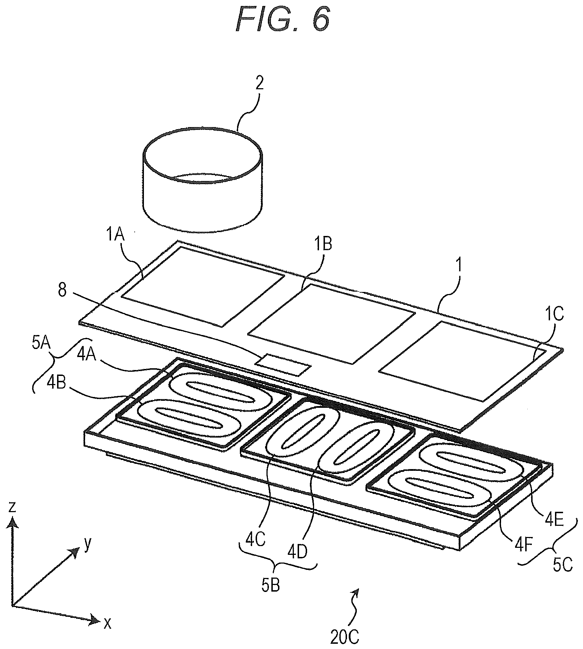

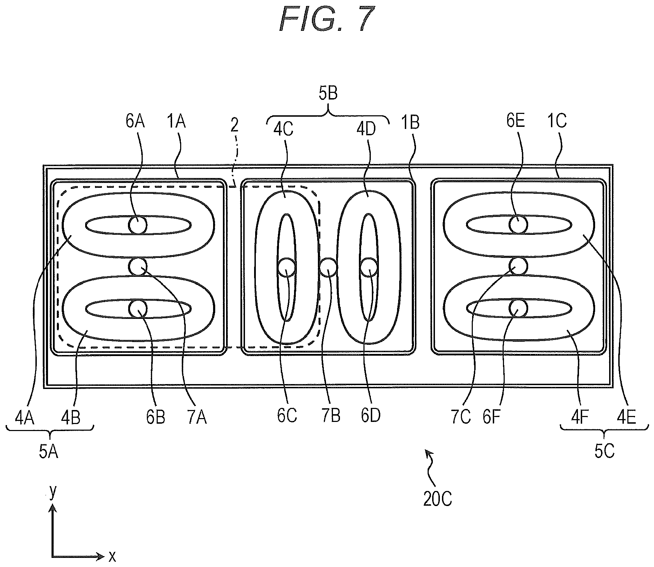

FIG. 6 is an exploded perspective view illustrating induction heating cooker 20C according to a second exemplary embodiment of the present disclosure. FIG. 7 is a plan view of induction heating cooker 20C as seen through top plate 1. A dotted line in FIG. 7 indicates that pot 2 is placed across sections 1A, 1B.

As illustrated in FIGS. 6 and 7, induction heating cooker 20C has heating coil unit 5C adjacent to heating coil unit 5B in the x direction, in addition to the configuration of induction heating cooker 20A. That is, heating coil unit 5B is disposed between heating coil units 5A and 5C.

Heating coil unit 5C has a configuration similar to the configuration of heating coil unit 5A illustrated in FIG. 3. That is, heating coil unit 5C has heating coil 4E, heating coil 4F, an inverter (not illustrated), and two relays (not illustrated). The inverter and two relays are controlled by controller 9.

Heating coils 4E, 4F have an approximately elliptical shape with a major axis and a minor axis in a plan view, the major axis being oriented in a first direction (x direction). Heating coils 4E, 4F are disposed adjacent to each other in a direction of the minor axis (y direction). Specifically, the major axes of heating coils 4E, 4F are orthogonal to the major axes of heating coils 4C, 4D.

A third inverter is connected to heating coils 4E, 4F through two relays for supplying a high frequency current to heating coils 4E, 4F.

Thermistor 6E and thermistor 6F are provided at centers of heating coils 4E, 4F, respectively. Infrared sensor 7C is provided between heating coil 4E and heating coil 4F. Infrared sensor 7C may have a detectable range with a lower limit value of 70°C.

A temperature sensor may be provided between heating coil units 5B and 5C. Due to the temperature sensors, even when pot 2 is placed across heating coil units 5B, 5C, the temperature of pot 2 can more accurately be detected.

In the present exemplary embodiment, section 1C is formed on top plate 1 located above heating coil unit 5C.

According to this configuration, induction heating cooker 20C can respectively heat two pots using heating coil units 5A, 5C, for example.

When one of two pots is placed across heating coil units 5A, 5B, for example, induction heating cooker 20C can heat this pot by driving heating coil units 5A, 5B together.

As illustrated in FIG. 7, when pot 2 is placed across heating coils 4A, 4B in heating coil unit 5A and heating coil 4C in heating coil unit 5B, the relay corresponding to heating coil 4C is turned on and the relay corresponding to heating coil 4D is turned off in heating coil unit 5B.

When the inverter included in heating coil unit 5B is driven together with the inverter included in heating coil unit 5A with this state, heating coil 4C functions as an auxiliary heating coil of heating coil unit 5A.

In the present exemplary embodiment, heating coil unit 5C corresponds to a third heating coil unit. Heating coils 4E, 4F correspond to fifth and sixth heating coils, respectively. The inverter and two relays included in heating coil unit 5C correspond to a third inverter and fifth and sixth switching units, respectively.

### (Third exemplary embodiment)

### <Overall configuration>

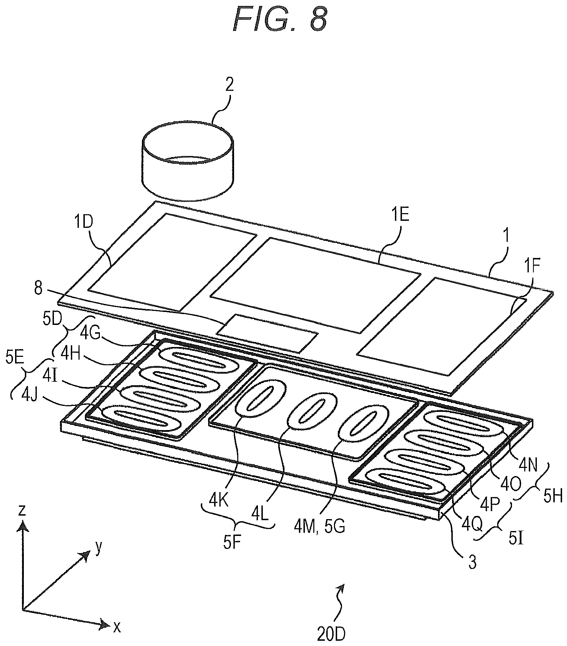

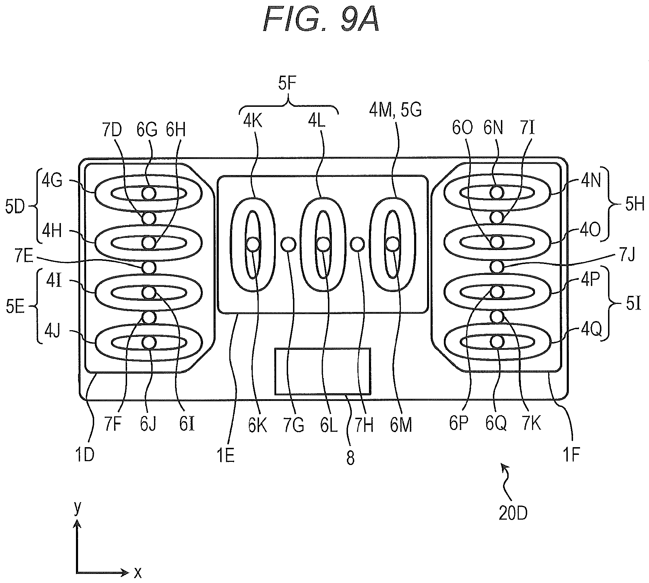

FIG. 8 is an exploded perspective view illustrating induction heating cooker 20D according to a third exemplary embodiment of the present disclosure. FIG. 9A is a plan view of induction heating cooker 20D as seen through top plate 1.

As illustrated in FIGS. 8 and 9A, induction heating cooker 20D has sections 1D, 1E, 1F on top plate 1.

Heating coil units 5D, 5E are disposed adjacent to each other below section 1D. Heating coil unit 5D includes heating coil 4G and heating coil 4H. Heating coil unit 5E includes heating coil 4I and heating coil 4J. Heating coils 4G to 4J are disposed adjacent to one another in a direction of a minor axis (y direction) with a major axis being oriented in a first direction (x direction).

Heating coil units 5F, 5G are disposed adjacent to each other below section 1E. Heating coil unit 5F includes heating coil 4K and heating coil 4L. Heating coil unit 5G includes heating coil 4M. Heating coils 4K to 4M are disposed adjacent to one another in a direction of a minor axis (x direction) with a major axis being oriented in a second direction (y direction).

Heating coil units 5H, 5I are disposed adjacent to each other below section 1F. Heating coil unit 5H includes heating coil 4N and heating coil 40. Heating coil unit 5I includes heating coil 4P and heating coil 4Q. Heating coils 4N to 4Q are disposed adjacent to one another in a direction of a minor axis (y direction) with a major axis being oriented in the first direction (x direction).

As well as heating coil units 5A, 5B illustrated in FIG. 3, each of heating coil units 5D to 5F, 5H, 5I includes an inverter and two relays (which are not illustrated). One of two relays is provided between the inverter and one of two heating coils, and the other of two relays is provided between the inverter and the other of two heating coils.

In each of heating coil units 5D to 5F, 5H, 5I, two relays are turned on or off to connect or disconnect a path between the inverter and two heating coils. Heating coil unit 5G includes an inverter connected to heating coil 4M.

The controller controls all inverters and all relays. Each inverter drives one or two heating coils included in each heating coil unit.

Thermistor 6G, thermistor 6H, thermistor 6I, thermistor 6J, thermistor 6K, thermistor 6L, thermistor 6M, thermistor 6N, thermistor 60, thermistor 6P, and thermistor 6Q are provided at centers of heating coils 4G to 4Q, respectively.

Infrared sensor 7D, infrared sensor 7E, and infrared sensor 7F are provided between heating coil 4G and heating coil 4H, between heating coil 4H and heating coil 4I, and between heating coil 4I and heating coil 4J, respectively.

Infrared sensor 7G and infrared sensor 7H are provided between heating coil 4K and heating coil 4L and between heating coil 4L and heating coil 4M, respectively. Infrared sensor 71, infrared sensor 7J, and infrared sensor 7K are provided between heating coil 4N and heating coil 40, between heating coil 40 and heating coil 4P, and between heating coil 4P and heating coil 4Q, respectively.

According to this configuration, induction heating cooker 20D can heat a plurality of pots, respectively, using heating coil units 5D to 5I, for example.

For example, when one pot is placed across heating coil units 5D, 5F, induction heating cooker 20D can heat this pot by driving heating coil units 5D, 5F together. When another pot is placed across heating coil units 5G, 5H, induction heating cooker 20D can heat this pot by driving heating coil units 5G, 5H together.

In the present exemplary embodiment, heating coil units 5D, 5F, 5H correspond to first, second, and third heating coil units, respectively. Heating coils 4D, 4E correspond to first and second heating coils, respectively. Heating coils 4K, 4L correspond to third and fourth heating coils, respectively. Heating coils 40, 4P correspond to fifth and sixth heating coils, respectively.

The inverter and two relays included in heating coil unit 5D correspond to a first inverter and first and second switching units, respectively. The inverter and two relays included in heating coil unit 5F correspond to a second inverter and third and fourth switching units, respectively. The inverter and two relays included in heating coil unit 5H correspond to a third inverter and fifth and sixth switching units, respectively.

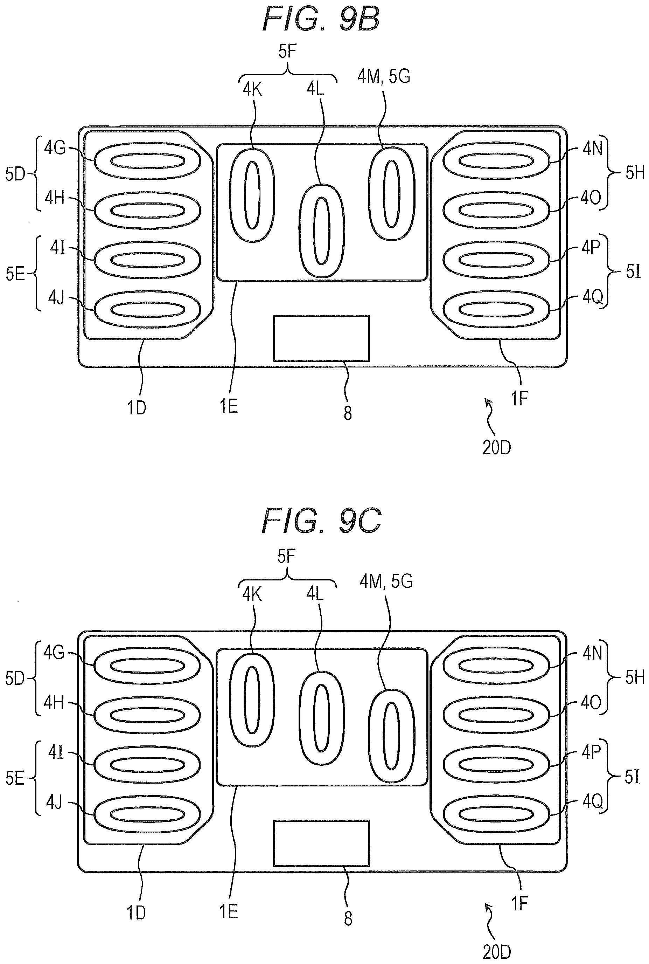

FIGS. 9B and 9C are plan views illustrating modifications of induction heating cooker 20D. In FIG. 9B, heating coils 4K to 4M are disposed in a zigzag manner. In FIG. 9C, heating coils 4K, 4L, 4M are disposed diagonally.

### <Display on display unit>

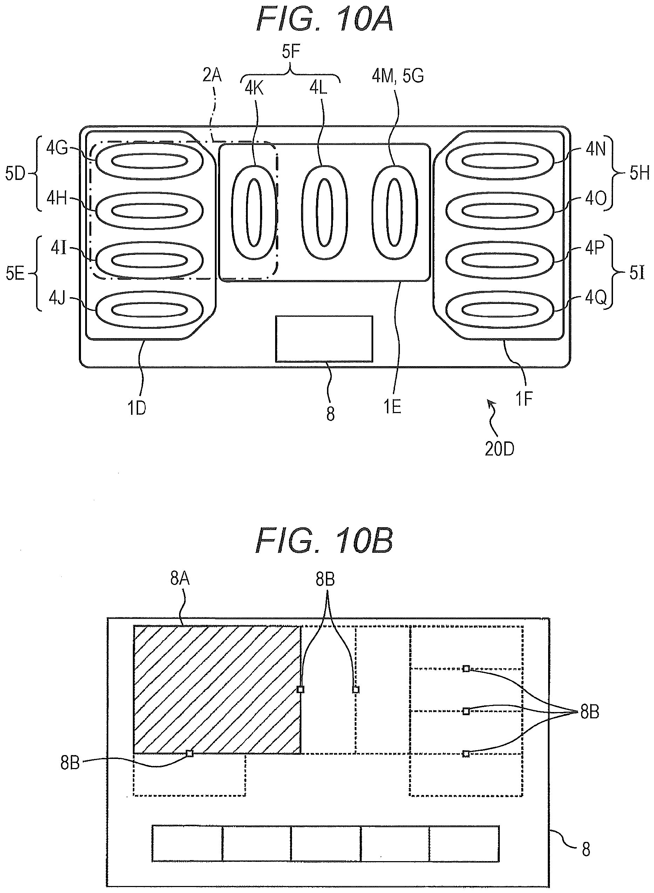

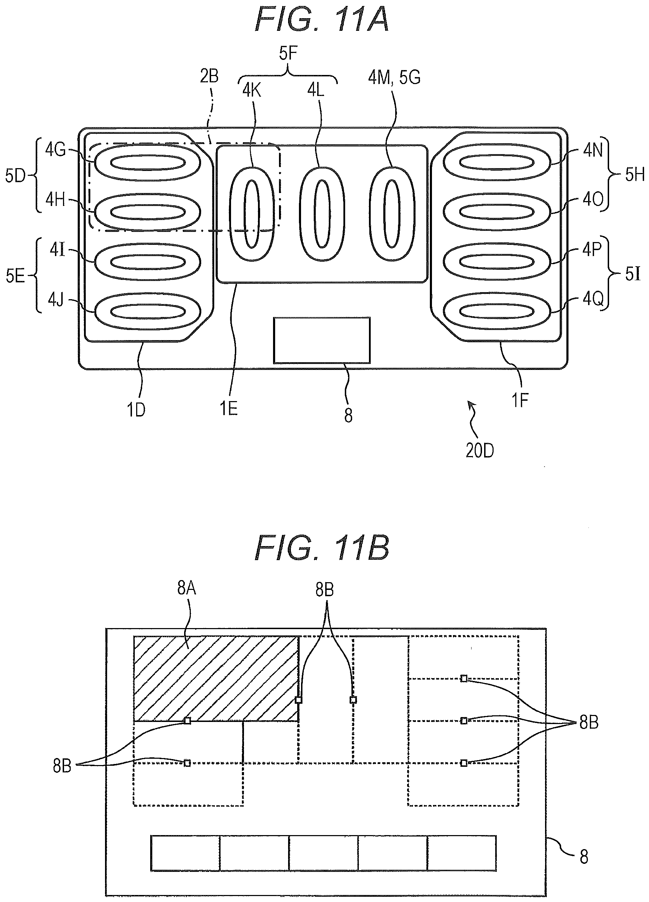

FIGS. 10A and 11A are plan views of induction heating cooker 20D for schematically illustrating a condition where a pot is placed across a plurality of heating coils. A dotted line in FIGS. 10A and 10B indicates that pots 2A, 2B are placed across sections 1D, 1E.

FIGS. 10B and 11B respectively illustrate a display on display unit 8 for indicating the conditions illustrated in FIGS. 10A and 11A.

As illustrated in FIG. 10A, pot 2A is placed across heating coils 4G, 4H, 4I and heating coil 4K. When pot 2A is placed as illustrated in FIG. 10A, display unit 8 lights up an area corresponding to a placement position of pot 2A (this area is referred to as lighted area 8A below) as illustrated in FIG. 10B.

In this case, lighted area 8A is an area corresponding to heating coils 4G, 4H, 4I, 4K in display unit 8. Border marks 8B indicate a border between two adjacent heating coils.

As illustrated in FIG. 11A, pot 2B is placed across relevant heating coils 4G, 4H and heating coil 4K. When pot 2B is placed as illustrated in FIG. 11A, display unit 8 lights up an area corresponding to the placement position of pot 2B as illustrated in FIG. 11B. In this case, lighted area 8A is an area corresponding to heating coils 4G, 4H, 4K.

Display unit 8 displays a placement condition of pot 2B placed across a plurality of heating coils such that pot 2B can be visually recognized as a single object.

### <Operation when one pot is placed across a plurality of sections>

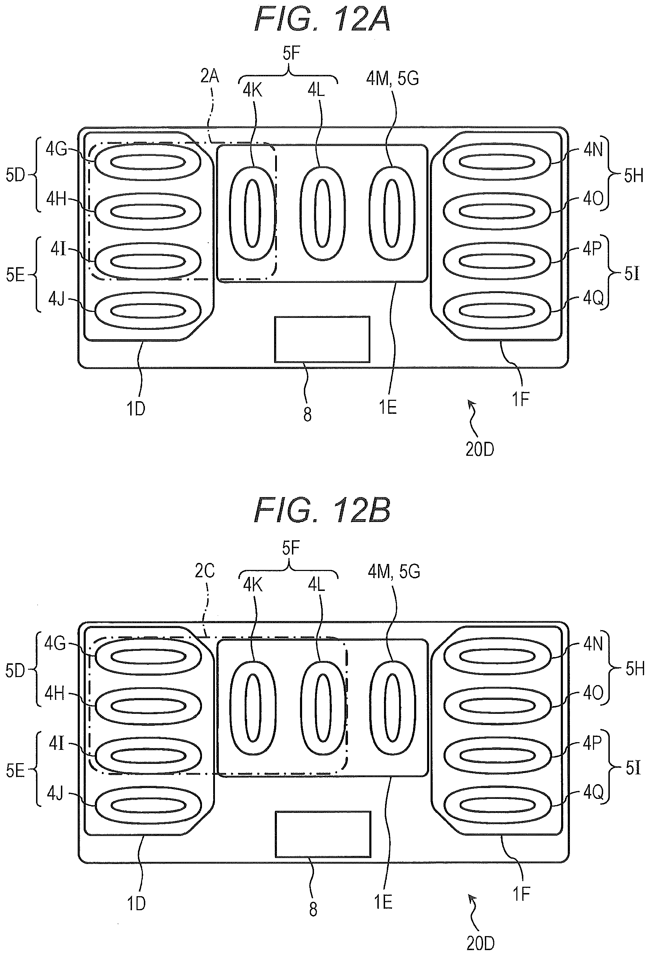

FIGS. 12A to 12L are schematic plan views of induction heating cooker 20D for describing conditions where pots of various sizes are placed across a plurality of sections.

In FIG. 12A, pot 2A is placed across heating coils 4G to 4I in relation to section 1D and heating coil 4K in relation to section 1E.

In this case, in heating coil unit 5D, two relays are both turned on. In heating coil unit 5E, the relay corresponding to heating coil 4I is turned on, while the relay corresponding to heating coil 4J is turned off. In heating coil unit 5F, the relay corresponding to heating coil 4K is turned on, while the relay corresponding to heating coil 4L is turned off.

In this state, pot 2A is heated by heating coils 4G to 4I, 4K by driving three inverters included in heating coil units 5D to 5F together.

In FIG. 12B, pot 2C is placed across heating coils 4G to 4I in relation to section 1D and heating coils 4K, 4L in relation to section 1E.

In this case, in heating coil unit 5D, two relays are both turned on. In heating coil unit 5E, the relay corresponding to heating coil 4I is turned on, while the relay corresponding to heating coil 4J is turned off. In heating coil unit 5F, two relays are both turned on.

In this state, pot 2C is heated by heating coils 4G to 4I, 4K, 4L by driving three inverters included in heating coil units 5D to 5F together.

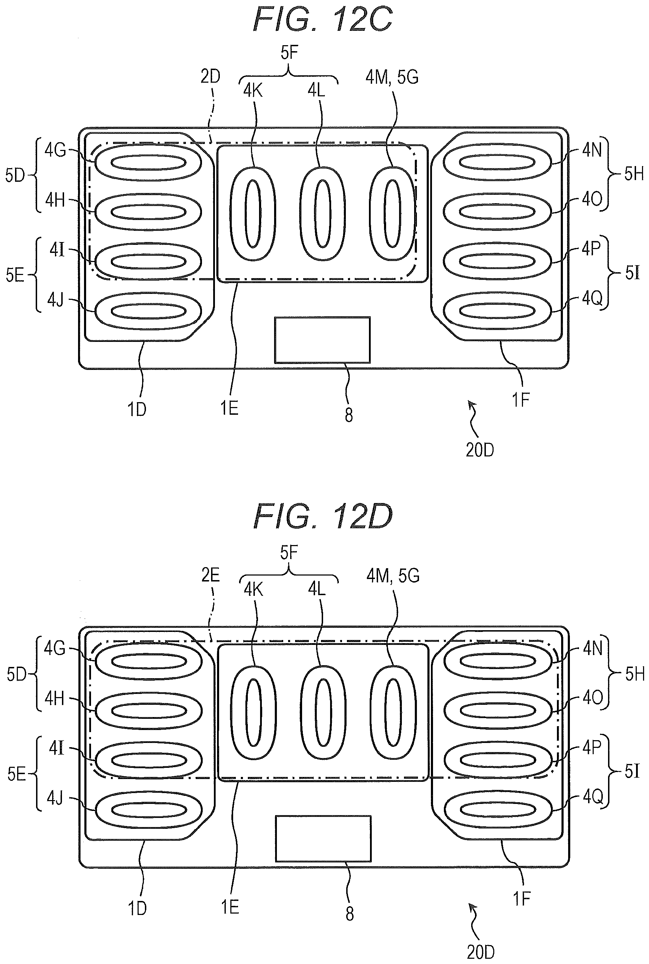

In FIG. 12C, pot 2D is placed across heating coils 4G to 4I in relation to section 1D and heating coils 4K to 4M in relation to section 1E. In this case, pot 2D is heated by heating coils 4G to 4I, 4K to 4M.

In this case, in heating coil unit 5D, two relays are both turned on. In heating coil unit 5E, the relay corresponding to heating coil 4I is turned on, while the relay corresponding to heating coil 4J is turned off. In heating coil unit 5F, two relays are both turned on.

In this state, pot 2D is heated by heating coils 4G to 4I, 4K to 4M by driving four inverters included in heating coil units 5D to 5G together.

In FIG. 12D, pot 2E is placed across heating coils 4G to 4I in relation to section 1D, heating coils 4K to 4M in relation to section 1E, and heating coils 4N to 4P in relation to section 1F.

In this case, in heating coil unit 5D, two relays are both turned on. In heating coil unit 5E, the relay corresponding to heating coil 4I is turned on, while the relay corresponding to heating coil 4J is turned off. In heating coil unit 5F, two relays are both turned on.

In heating coil unit 5H, two relays are both turned on. In heating coil unit 5I, the relay corresponding to heating coil 4P is turned on, while the relay corresponding to heating coil 4Q is turned off.

In this state, pot 2E is heated by heating coils 4G to 4I, 4K to 4M, 4N to 4P by driving six inverters included in heating coil units 5D to 5I together.

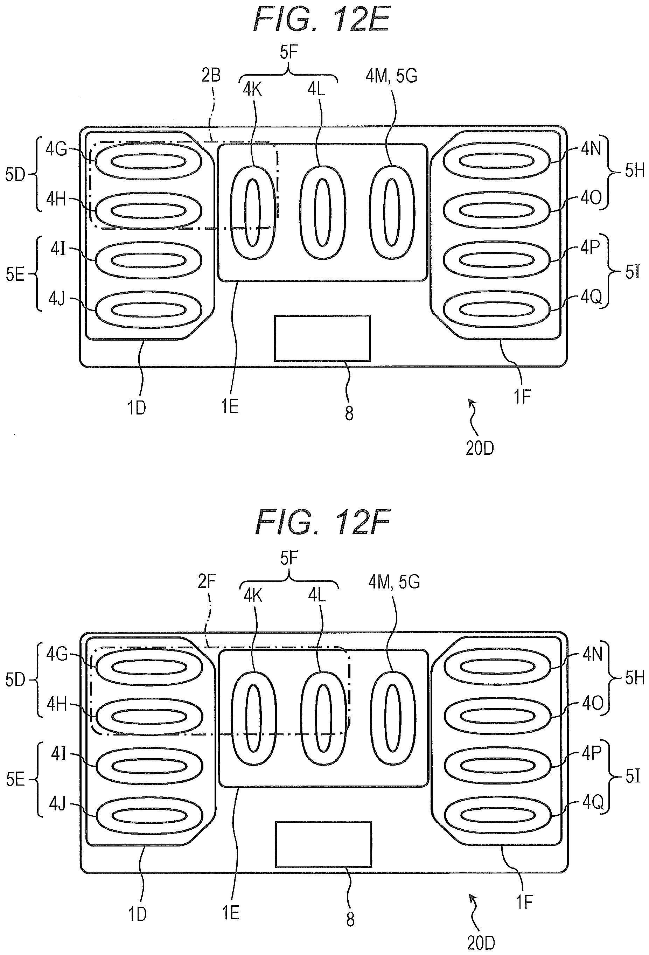

In FIG. 12E, pot 2B is placed across heating coils 4G, 4H in relation to section 1D and heating coil 4K in relation to section 1E. In this case, pot 2B is heated by heating coils 4G, 4H, 4K.

In this case, in heating coil unit 5D, two relays are both turned on. In heating coil unit 5F, the relay corresponding to heating coil 4K is turned on, while the relay corresponding to heating coil 4L is turned off.

In this state, pot 2B is heated by heating coils 4G, 4H, 4K by driving two inverters included in heating coil units 5D, 5F together.

In FIG. 12F, pot 2F is placed across heating coils 4G, 4H in relation to section 1D and heating coils 4K, 4L in relation to section 1E.

In this case, in heating coil unit 5D, two relays are both turned on. In heating coil unit 5F, two relays are both turned on. In this state, pot 2F is heated by heating coils 4G, 4H, 4K, 4L by driving two inverters included in heating coil units 5D, 5F together.

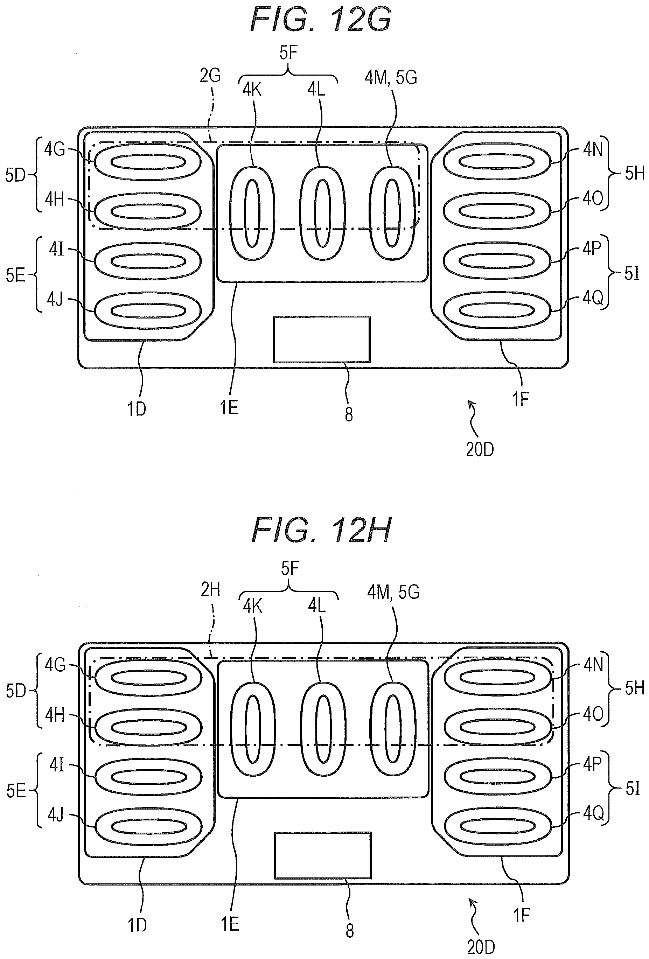

In FIG. 12G, pot 2G is placed across heating coils 4G, 4H in relation to section 1D and heating coils 4K to 4M in relation to section 1E.

In this case, in heating coil unit 5D, two relays are both turned on. In heating coil unit 5F, two relays are both turned on. In this state, pot 2G is heated by heating coils 4G, 4H, 4K to 4M by driving three inverters included in heating coil units 5D, 5F, 5G together.

In FIG. 12H, pot 2H is placed across heating coils 4G, 4H in relation to section 1D, heating coils 4K to 4M in relation to section 1E, and heating coils 4N, 40 in relation to section 1F.

In this case, in heating coil unit 5D, two relays are both turned on. In heating coil unit 5F, two relays are both turned on. In heating coil unit 5H, two relays are both turned on.

In this state, pot 2H is heated by heating coils 4G, 4H, 4K to 4M, 4N, 40 by driving four inverters included in heating coil units 5D, 5F, 5G, 5H together.

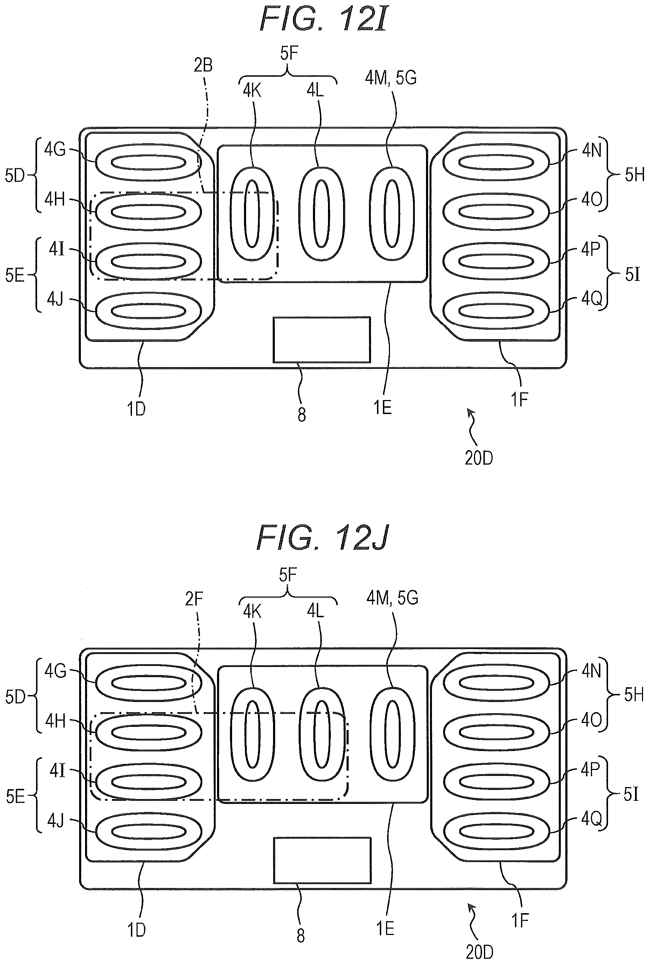

In FIG. 12I, pot 2B is placed across heating coils 4H, 4I in relation to section 1D and heating coil 4K in relation to section 1E.

In this case, in heating coil unit 5D, the relay corresponding to heating coil 4G is turned off, while the relay corresponding to heating coil 4H is turned on. In heating coil unit 5E, the relay corresponding to heating coil 4I is turned on, while the relay corresponding to heating coil 4J is turned off. In heating coil unit 5F, the relay corresponding to heating coil 4K is turned on, while the relay corresponding to heating coil 4L is turned off.

In this state, pot 2B is heated by heating coils 4H, 4I, 4K by driving three inverters included in heating coil units 5D to 5F together.

In FIG. 12J, pot 2F is placed across heating coils 4H, 4I in relation to section 1D and heating coils 4K, 4L in relation to section 1E.

In this case, in heating coil unit 5D, the relay corresponding to heating coil 4G is turned off, while the relay corresponding to heating coil 4H is turned on. In heating coil unit 5E, the relay corresponding to heating coil 4I is turned on, while the relay corresponding to heating coil 4J is turned off. In heating coil unit 5F, two relays are both turned on.

In this state, pot 2F is heated by heating coils 4H, 4I, 4K, 4L by driving three inverters included in heating coil units 5D to 5F together.

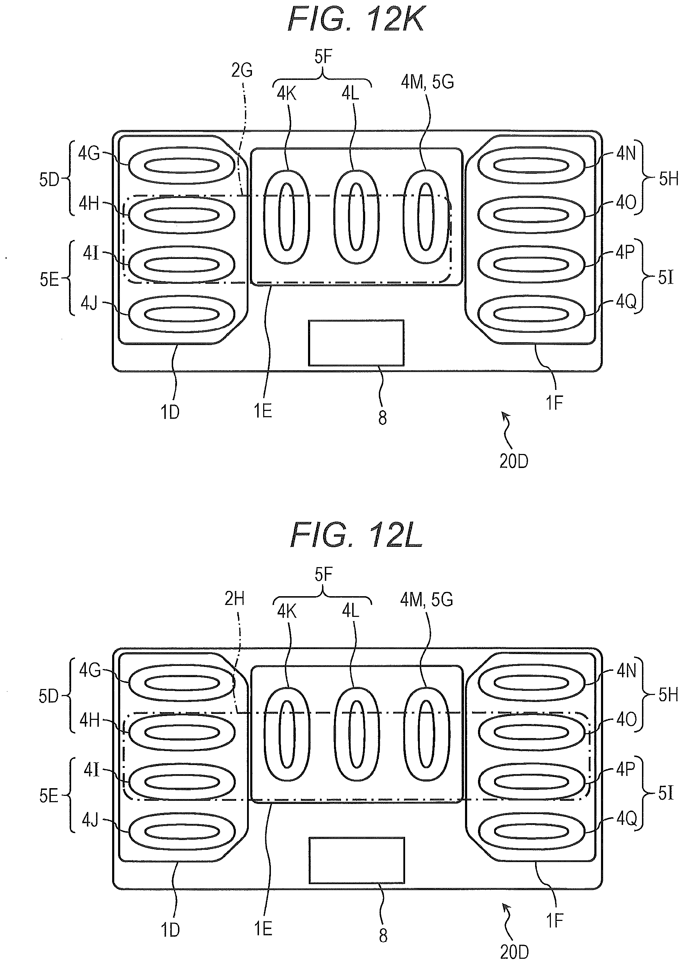

In FIG. 12K, pot 2G is placed across heating coils 4H, 4I in relation to section 1D and heating coils 4K to 4M in relation to section 1E.

In this case, in heating coil unit 5D, the relay corresponding to heating coil 4G is turned off, while the relay corresponding to heating coil 4H is turned on. In heating coil unit 5E, the relay corresponding to heating coil 4I is turned on, while the relay corresponding to heating coil 4J is turned off. In heating coil unit 5F, two relays are both turned off.

In this state, pot 2G is heated by heating coils 4H, 4I, 4K to 4M by driving four inverters included in heating coil units 5D to 5G together.

In FIG. 12L, pot 2H is placed across heating coils 4H, 4I in relation to section 1D, heating coils 4K to 4M in relation to section 1E, and heating coils 40, 4P in relation to section 1F.

In this case, in heating coil unit 5D, the relay corresponding to heating coil 4G is turned off, while the relay corresponding to heating coil 4H is turned on. In heating coil unit 5E, the relay corresponding to heating coil 4I is turned on, while the relay corresponding to heating coil 4J is turned off. In heating coil unit 5F, two relays are both turned off.

In heating coil unit 5H, the relay corresponding to heating coil 4N is turned off, while the relay corresponding to heating coil 40 is turned on. In heating coil unit 5I, the relay corresponding to heating coil 4P is turned on, while the relay corresponding to heating coil 4Q is turned off.

In this state, pot 2H is heated by heating coils 4H, 4I, 4K to 4M, 40, 4P by driving six inverters included in heating coil units 5D to 5I together.

According to the present exemplary embodiment, when pots 2A to 2H of different sizes are placed across a plurality of heating coils as illustrated in FIGS. 12A to 12L, the heating coils above which the pots are placed can be driven. Thus, positions and sizes of heating zones can be appropriately changed according to positions and sizes of the placed pots.

### <Operation when two pots are placed across a plurality of sections>

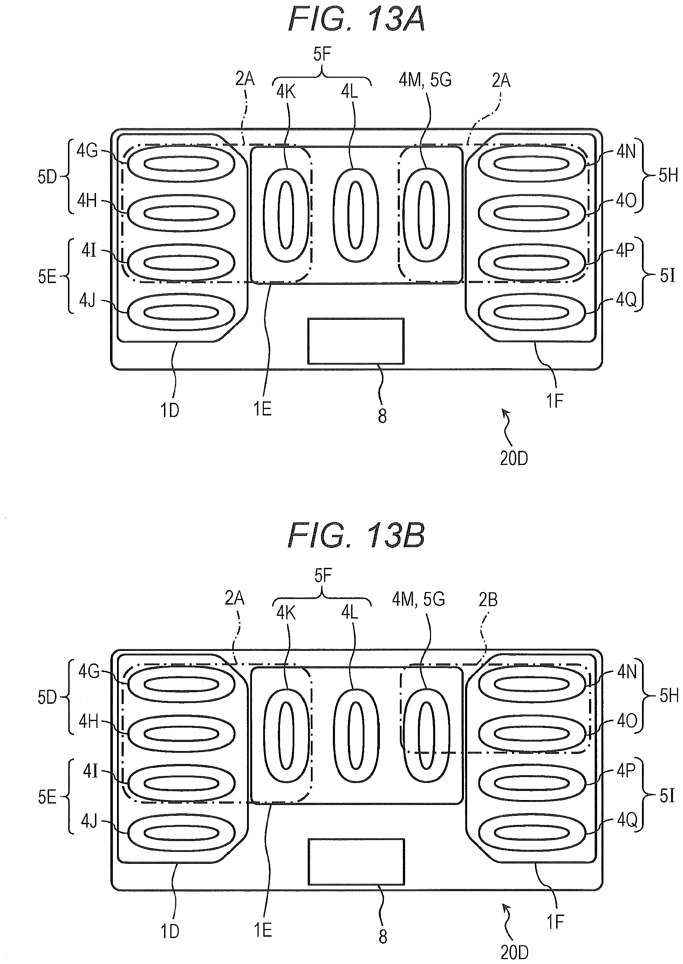

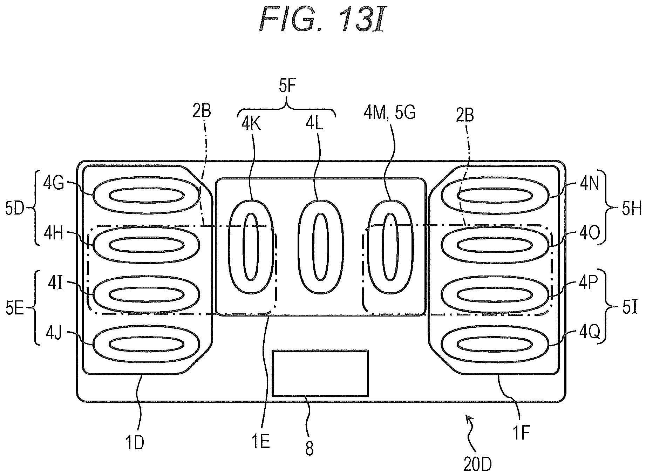

FIGS. 13A to 13I are plan views of induction heating cooker 20D for schematically illustrating conditions where two pots of different sizes are placed across a plurality of sections.

As illustrated in FIG. 13A, two pots 2A are placed on induction heating cooker 20D. In FIG. 13A, one of two pots 2A is placed across heating coils 4G to 4I in relation to section 1D and heating coil 4K in relation to section 1E. The other of two pots 2A is placed across heating coil 4M in relation to section 1E and heating coils 4N to 4P in relation to section 1F.

In this case, in heating coil unit 5D, two relays are both turned on. In heating coil unit 5E, the relay corresponding to heating coil 4I is turned on, while the relay corresponding to heating coil 4J is turned off. In heating coil unit 5F, the relay corresponding to heating coil 4K is turned on, while the relay corresponding to heating coil 4L is turned off.

In heating coil unit 5H, two relays are both turned on. In heating coil unit 5I, the relay corresponding to heating coil 4P is turned on, while the relay corresponding to heating coil 4Q is turned off.

In this state, one of two pots 2A is heated by heating coils 4G to 4I, 4K by driving three inverters included in heating coil units 5D to 5F together. The other of two pots 2A is heated by heating coils 4M to 4P by driving three inverters included in heating coil units 5G to 5I together.

As illustrated in FIG. 13B, pots 2A, 2B are placed on induction heating cooker 20D. In FIG. 13B, pot 2A is placed across heating coils 4G to 4I in relation to section 1D and heating coil 4K in relation to section 1E. Pot 2B is placed across heating coil 4M in relation to section 1E and heating coils 4N, 40 in relation to section 1F.

In this case, in heating coil unit 5D, two relays are both turned on. In heating coil unit 5E, the relay corresponding to heating coil 4I is turned on, while the relay corresponding to heating coil 4J is turned off. In heating coil unit 5F, the relay corresponding to heating coil 4K is turned on, while the relay corresponding to heating coil 4L is turned off. In heating coil unit 5H, two relays are both turned on.

In this state, pot 2A is heated by heating coils 4G to 4I, 4K by driving three inverters included in heating coil units 5D to 5F together. Pot 2B is heated by heating coils 4M to 40 by driving two inverters included in heating coil units 5G, 5H together.

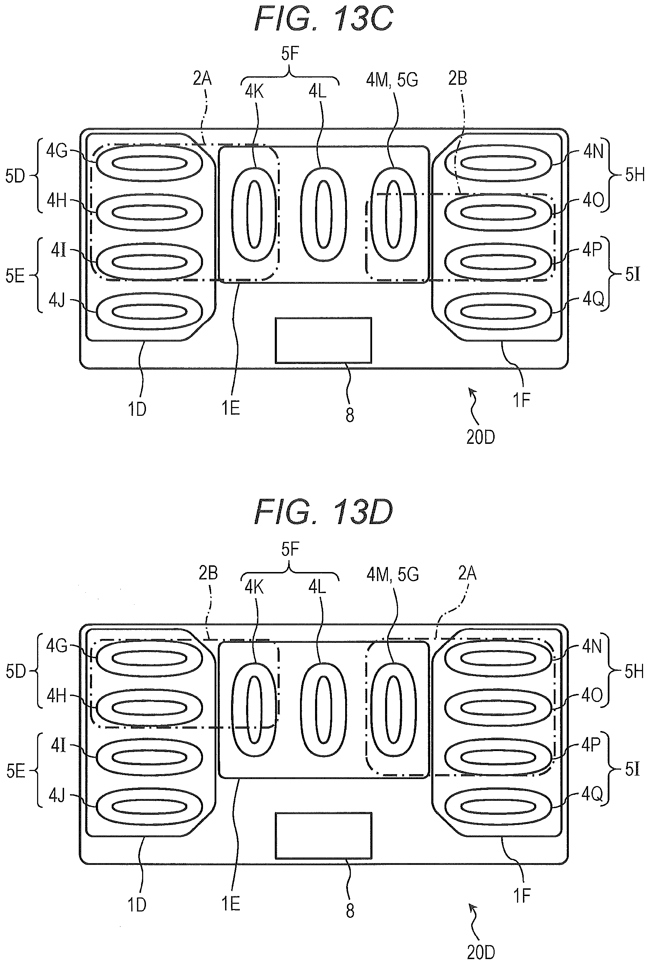

As illustrated in FIG. 13C, pots 2A, 2B are placed on induction heating cooker 20D. In FIG. 13C, pot 2A is placed across heating coils 4G to 4I in relation to section 1D and heating coil 4K in relation to section 1E. Pot 2B is placed across heating coil 4M in relation to section 1E and heating coils 40, 4P in relation to section 1F.

In this case, in heating coil unit 5D, two relays are both turned on. In heating coil unit 5E, the relay corresponding to heating coil 4I is turned on, while the relay corresponding to heating coil 4J is turned off. In heating coil unit 5F, the relay corresponding to heating coil 4K is turned on, while the relay corresponding to heating coil 4L is turned off.

In heating coil unit 5H, the relay corresponding to heating coil 4N is turned off, while the relay corresponding to heating coil 40 is turned on. In heating coil unit 51, the relay corresponding to heating coil 4P is turned on, while the relay corresponding to heating coil 4Q is turned off.

In this state, pot 2A is heated by heating coils 4G to 4I, 4K by driving three inverters included in heating coil units 5D to 5F together. Pot 2B is heated by heating coils 4M, 40, 4P by driving three inverters included in heating coil units 5G to 51 together.

As illustrated in FIG. 13D, pots 2A, 2B are placed on induction heating cooker 20D. In FIG. 13D, pot 2A is placed across heating coil 4M in relation to section 1E and heating coils 4N to 4P in relation to section 1F. Pot 2B is placed across heating coils 4G, 4H in relation to section 1D and heating coil 4K in relation to section 1E.

In this case, in heating coil unit 5D, two relays are both turned on. In heating coil unit 5F, the relay corresponding to heating coil 4K is turned on, while the relay corresponding to heating coil 4L is turned off.

In heating coil unit 5H, two relays are both turned on. In heating coil unit 5I, the relay corresponding to heating coil 4P is turned on, while the relay corresponding to heating coil 4Q is turned off.

In this state, pot 2B is heated by heating coils 4G, 4H, 4K by driving two inverters included in heating coil units 5D, 5F together. Pot 2A is heated by heating coils 4M to 4P by driving three inverters included in heating coil units 5G to 5I together.

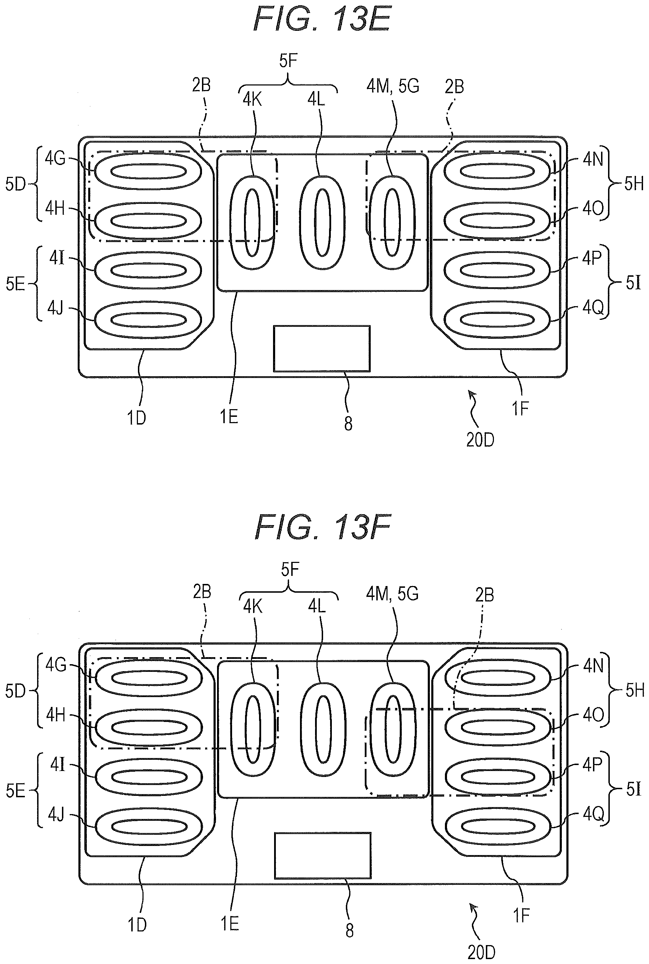

As illustrated in FIG. 13E, two pots 2B are placed on induction heating cooker 20D. In FIG. 13E, one of two pots 2B is placed across heating coils 4G, 4H in relation to section 1D and heating coil 4K in relation to section 1E. The other of two pots 2B is placed across heating coil 4M in relation to section 1E and heating coils 4N, 40 in relation to section 1F.

In this case, in heating coil unit 5D, two relays are both turned on. In heating coil unit 5F, the relay corresponding to heating coil 4K is turned on, while the relay corresponding to heating coil 4L is turned off. In heating coil unit 5H, two relays are both turned on.

In this state, one of two pots 2B is heated by heating coils 4G, 4H, 4K by driving two inverters included in heating coil units 5D, 5F together. The other of two pots 2B is heated by heating coils 4M to 40 by driving two inverters included in heating coil units 5G, 5H together.

As illustrated in FIG. 13F, two pots 2B are placed on induction heating cooker 20D. In FIG. 13F, one of two pots 2B is placed across heating coils 4G, 4H in relation to section 1D and heating coil 4K in relation to section 1E. The other of two pots 2B is placed across heating coil 4M in relation to section 1E and heating coils 40, 4P in relation to section 1F.

In this case, in heating coil unit 5D, two relays are both turned on. In heating coil unit 5F, the relay corresponding to heating coil 4K is turned on, while the relay corresponding to heating coil 4L is turned off.

In heating coil unit 5H, the relay corresponding to heating coil 4N is turned off, while the relay corresponding to heating coil 40 is turned on. In heating coil unit 5I, the relay corresponding to heating coil 4P is turned on, while the relay corresponding to heating coil 4Q is turned off.

In this state, one of two pots 2B is heated by heating coils 4G, 4H, 4K by driving two inverters included in heating coil units 5D, 5F together. The other of two pots 2B is heated by heating coils 4M, 40, 4P by driving three inverters included in heating coil units 5G to 5I together.

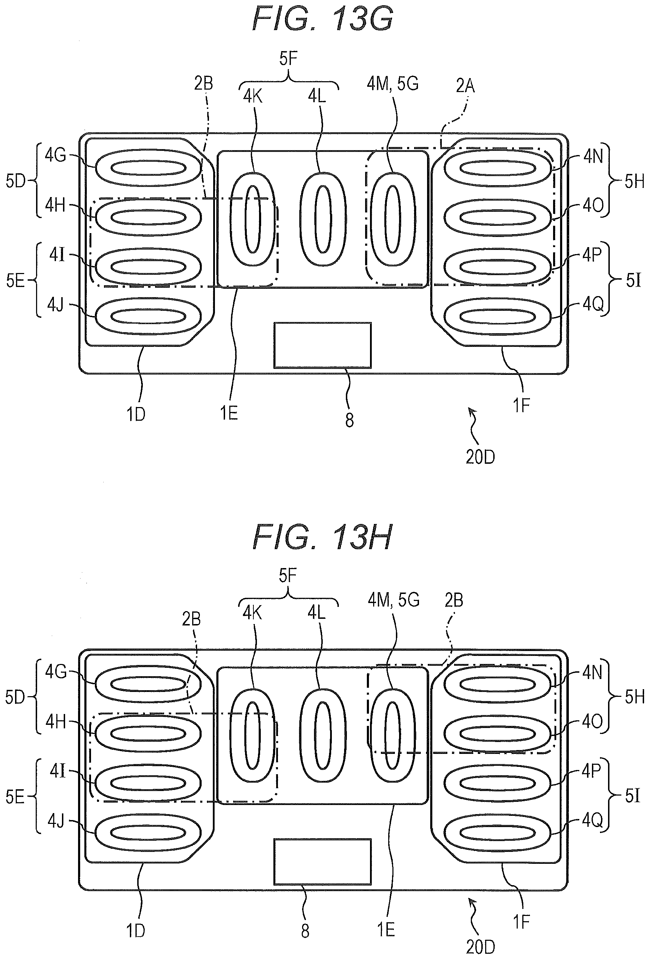

As illustrated in FIG. 13G, pots 2A, 2B are placed on induction heating cooker 20D. In FIG. 13G, pot 2A is placed across heating coils 4N to 4P in relation to section 1F and heating coil 4M in relation to section 1E. Pot 2B is placed across heating coils 4H, 4I in relation to section 1D and heating coil 4K in relation to section 1E.

In this case, in heating coil unit 5D, the relay corresponding to heating coil 4G is turned off, while the relay corresponding to heating coil 4H is turned on. In heating coil unit 5E, the relay corresponding to heating coil 4I is turned on, while the relay corresponding to heating coil 4J is turned off. In heating coil unit 5F, the relay corresponding to heating coil 4K is turned on, while the relay corresponding to heating coil 4L is turned off.

In heating coil unit 5H, two relays are both turned on. In heating coil unit 5I, the relay corresponding to heating coil 4P is turned on, while the relay corresponding to heating coil 4Q is turned off.

In this state, pot 2B is heated by heating coils 4H, 4I, 4K by driving three inverters included in heating coil units 5D to 5F together. Pot 2A is heated by heating coils 4M to 4P by driving three inverters included in heating coil units 5G to 5I together.

As illustrated in FIG. 13H, two pots 2B are placed on induction heating cooker 20D. In FIG. 13H, one of two pots 2B is placed across heating coils 4H, 4I in relation to section 1D and heating coil 4K in relation to section 1E. The other of two pots 2B is placed across heating coils 4N, 40 in relation to section 1F and heating coil 4M in relation to section 1E.

In this case, in heating coil unit 5D, the relay corresponding to heating coil 4G is turned off, while the relay corresponding to heating coil 4H is turned on. In heating coil unit 5E, the relay corresponding to heating coil 4I is turned on, while the relay corresponding to heating coil 4J is turned off.

In heating coil unit 5F, the relay corresponding to heating coil 4K is turned on, while the relay corresponding to heating coil 4L is turned off. In heating coil unit 5H, two relays are both turned on.

In this state, one of two pots 2B is heated by heating coils 4H, 41, 4K by driving three inverters included in heating coil units 5D to 5F together. The other of two pots 2B is heated by heating coils 4M to 40 by driving two inverters included in heating coil units 5G, 5H together.

As illustrated in FIG. 131, two pots 2B are placed on induction heating cooker 20D. In FIG. 13H, one of two pots 2B is placed across heating coils 4H, 41 in relation to section 1D and heating coil 4K in relation to section 1E. The other of two pots 2B is placed across heating coils 40, 4P in relation to section 1F and heating coil 4M in relation to section 1E.

In this case, in heating coil unit 5D, the relay corresponding to heating coil 4G is turned off, while the relay corresponding to heating coil 4H is turned on. In heating coil unit 5E, the relay corresponding to heating coil 41 is turned on, while the relay corresponding to heating coil 4J is turned off. In heating coil unit 5F, the relay corresponding to heating coil 4K is turned on, while the relay corresponding to heating coil 4L is turned off.

In heating coil unit 5H, the relay corresponding to heating coil 4N is turned off, while the relay corresponding to heating coil 40 is turned on. In heating coil unit 51, the relay corresponding to heating coil 4P is turned on, while the relay corresponding to heating coil 4Q is turned off.

In this state, one of two pots 2B is heated by heating coils 4H, 4I, 4K by driving three inverters included in heating coil units 5D to 5F together. The other of two pots 2B is heated by heating coils 4M, 40, 4P by driving three inverters included in heating coil units 5G to 51 together.

According to the present exemplary embodiment, when pots 2A, 2B of different sizes are placed across a plurality of heating coils as illustrated in FIGS. 13A to 131, the heating coils above which the pots are placed can be driven. Thus, positions and sizes of heating zones can be appropriately changed according to positions and sizes of the placed pots.

### <Function as auxiliary heating coil>

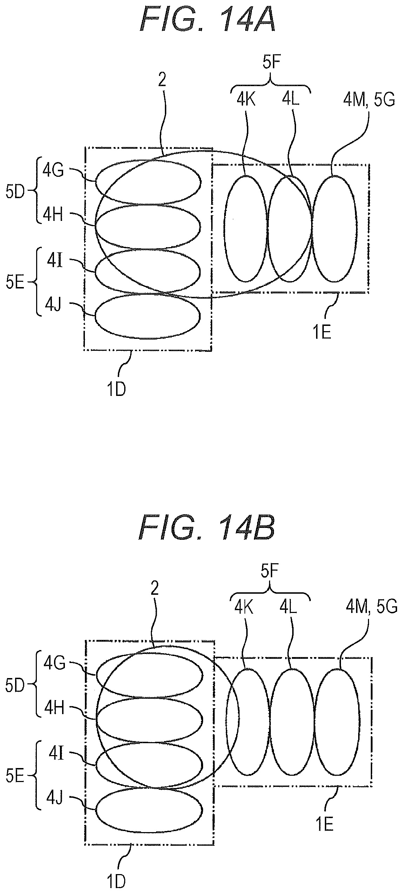

FIGS. 14A and 14B are schematic views respectively illustrating a condition where pot 2 is placed across sections 1D and 1E.

As illustrated in FIG. 14A, pot 2 is placed to cover heating coils 4G to 41 in relation to section 1D and heating coils 4K, 4L in relation to section 1E. As illustrated in FIG. 14B, pot 2 is placed to cover heating coils 4G to 41 in relation to section 1D and a small portion of heating coil 4K in relation to section 1E.

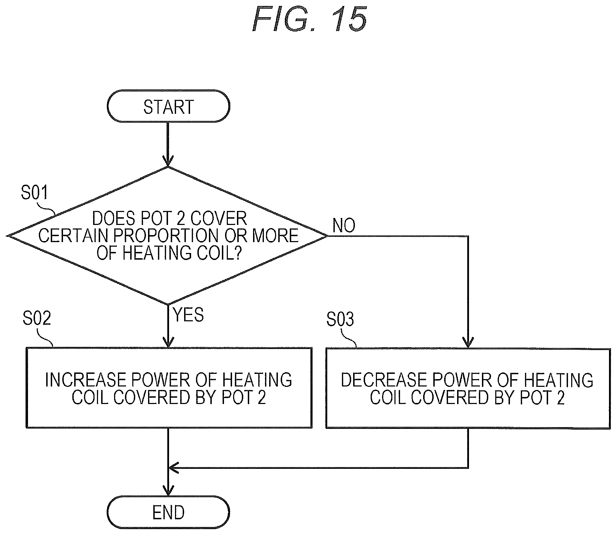

FIG. 15 is a flowchart illustrating heating control when a pot is placed across section 1D and section 1E. As illustrated in FIG. 15, in step S01, it is determined whether pot 2 is placed to cover a certain proportion or more of a heating coil.

When pot 2 is placed to cover whole heating coil 4K and almost whole heating coil 4L as illustrated in FIG. 14A, the process proceeds to step S02 from step S01.

As illustrated in FIGS. 8 and 9A, the space between heating coils 4K to 4M in relation to section 1E is wider than the space between heating coils 4G to 4J in relation to section 1D in induction heating cooker 20D. Therefore, in step S02, power of heating coils 4K, 4L is adjusted to be larger than power per heating coil in relation to section 1D.

Thus, a power density of heating coils in relation to section 1E can be made equal to a power density of heating coils in relation to section 1D. Consequently, uneven heating can be reduced. In this way, heating coils 4K, 4L function as auxiliary heating coils assisting heating coil units 5D, 5E.

When pot 2 is placed to cover only a small portion of heating coil 4K in relation to section 1E as illustrated in FIG. 14B, the process proceeds to step S03 from step S01.

In step S03, power smaller than power to be supplied to heating coils in relation to section 1D is supplied to heating coils in relation to section 1E. Thus, uneven heating can be reduced. In this case, heating coil 4K functions as an auxiliary heating coil assisting heating coil units 5D, 5E.

As described above, infrared sensors 7D, 7E, 7F have a detectable range with a lower limit value of 70°C. Infrared sensors 7D, 7E have a detectable range with a lower limit value of 140°C.

When pot 2 is placed across section 1D and section 1E, controller 9 controls heating coils 4K to 4M in relation to section 1E based on detection values of infrared sensors 7A to 7F, which have a larger detectable range, in relation to section 1D. Thus, heating coils 4K to 4M in relation to section 1E are driven together with heating coils 4G to 4J in relation to section 1D. Consequently, uneven heating can be reduced.

### INDUSTRIAL APPLICABILITY

The present disclosure is applicable to an induction heating cooker provided with a plurality of heating coils.

### REFERENCE MARKS IN THE DRAWINGS

1: top plate
1A, 1B, 1C, 1D, 1E, 1F: section
2, 2A, 2B, 2C, 2D, 2E, 2F, 2G, 2H: pot
3: housing
4A, 4B, 4C, 4D, 4E, 4F, 4G, 4H, 4I, 4J, 4K, 4L, 4M, 4N, 40, 4P, 4Q: heating coil
5A, 5B, 5C, 5D, 5E, 5F, 5G, 5H, 51: heating coil unit
6A, 6B, 6C, 6D, 6E, 6F, 6G, 6H, 61, 6J, 6K, 6L, 6M, 6N, 60, 6P, 6Q: thermistor
7A, 7B, 7C, 7D, 7E, 7F, 7G, 7H, 71, 7J, 7K: infrared sensor
8: display unit
8A: lighted area
8B: border mark
9: controller
10A, 10B: inverter
11A, 11B, 11C, 11D: relay
20A, 20B, 20C, 20D: induction heating cooker

## Claims

1. An induction heating cooker (20D) comprising:
a top plate (1) on which an object to be heated is placed;
a first heating coil unit (5D; 5E) and a second heating coil unit (5F) that are provided adjacent to each other below the top plate (1); and
a controller (9) configured to control the first heating coil unit (5D; 5E) and the second heating coil unit (5F),
wherein the first heating coil unit (5D; 5E) has a first heating coil (4G; 4I), a second heating coil (4H; 4J), and a first inverter, and the second heating coil unit (5F) has a third heating coil (4K), a fourth heating coil (4L), and a second inverter,
the first to fourth heating coils (4G to 4L) have an elliptical shape having a major axis and a minor axis in a plan view,
the first and second heating coils (4G; 4H; 41; 4J) have the major axis oriented in a first direction and are disposed adjacent to each other in a direction of the minor axis, and the third and fourth heating coils (4K; 4L) have the major axis oriented in a second direction orthogonal to the first direction and are disposed adjacent to each other in a direction of the minor axis, and
the first inverter is configured to supply a high frequency current to the first and second heating coils (4G; 4H; 41; 4J), and the second inverter is configured to supply a high frequency current to the third and fourth heating coils (4K; 4L),
**characterized in that**
the induction heating cooker (20D) further includes another heating coil unit (5G) including another heating coil (4M) and another inverter,
the another heating coil (4M) is disposed adjacent to the second heating coil unit (5F), and has the elliptical shape having the major axis and the minor axis in a plan view,
wherein the third heating coil (4K), the fourth heating coil (4L) and the another heating coil (4M) are disposed adjacent to each other in a direction of the minor axis,
wherein the another heating coil (4M) is connected to the another inverter different from the first inverter and the second inverter, and
wherein the another inverter is controlled by the controller (9), and is configured to supply the high frequency current to the another heating coil (4M).

2. The induction heating cooker (20D) according to claim 1,
wherein the first heating coil unit (5D; 5E) is provided adjacent to the third heating coil (4K) in the second heating coil unit (5F).

3. The induction heating cooker (20D) according to claim 1,
wherein the second direction is a depth direction of the top plate (1).

4. The induction heating cooker (20D) according to claim 1,
wherein the first heating coil unit (5D; 5E) has a first switching unit provided between the first heating coil (4G; 41) and the first inverter and a second switching unit provided between the second heating coil (4H; 4J) and the first inverter, and
the second heating coil unit (5F) has a third switching unit provided between the third heating coil (4K) and the second inverter and a fourth switching unit provided between the fourth heating coil (4L) and the second inverter.

5. The induction heating cooker (20D) according to claim 1,
wherein the first heating coil unit (5D; 5E) has a temperature sensor (7D; 7F) provided between the first heating coil (4G; 41) and the second heating coil (4H; 4J), and
the second heating coil unit (5F) has a temperature sensor (7G) provided between the third heating coil (4K) and the fourth heating coil (4L).

6. The induction heating cooker (20D) according to claim 1, further comprising a third heating coil unit (5H; 51) that is provided adjacent to the second heating coil unit (5F) below the top plate (1) and is controlled by the controller (9),
wherein the third heating coil unit (5H; 51) has a fifth heating coil (4N; 4P), a sixth heating coil (4O; 4Q), and a third inverter,
the fifth and sixth heating coils (4N to 4Q) have the elliptical shape having the major axis and the minor axis in a plan view,
the fifth and sixth heating coils (4N to 4Q) have the major axis oriented in the first direction and are disposed adjacent to each other in a direction of the minor axis, and
the third inverter is configured to supply a high frequency current to the fifth and sixth heating coils (4N to 4Q).

7. The induction heating cooker (20D) according to claim 6,
wherein the third heating coil unit (5H; 51) is provided adjacent to the fourth heating coil in the second heating coil unit (5F).

8. The induction heating cooker (20D) according to claim 6,
wherein the third heating coil unit (5H; 51) has a fifth switching unit provided between the fifth heating coil (4N; 4D) and the third inverter and a sixth switching unit provided between the sixth heating coil (4O; 4Q) and the third inverter.

9. The induction heating cooker (20D) according to claim 6,
wherein the third heating coil unit (5H; 51) has a temperature sensor (71; 7K) provided between the fifth heating coil (4N; 4P) and the sixth heating coil 4O; 4Q).

## Patentansprüche

1. Induktionsherd (20D), umfassend:
eine obere Platte (1), auf die ein zu beheizender Gegenstand gelegt wird;
eine erste Heizspuleneinheit (5D; 5E) und eine zweite Heizspuleneinheit (5F), die nebeneinander unterhalb der oberen Platte (1) angeordnet sind; und
ein Steuergerät (9), das so konfiguriert ist, dass es die erste Heizschlangeneinheit (5D; 5E) und die zweite Heizschlangeneinheit (5F) steuert,
wobei die erste Heizspuleneinheit (5D; 5E) eine erste Heizspule (4G; 4I), eine zweite Heizspule (4H; 4J) und einen ersten Wechselrichter aufweist, und die zweite Heizspuleneinheit (5F) eine dritte Heizspule (4K), eine vierte Heizspule (4L) und einen zweiten Wechselrichter aufweist,
die erste bis vierte Heizspirale (4G bis 4L) haben in der Draufsicht eine elliptische Form mit einer Hauptachse und einer Nebenachse,
die erste und die zweite Heizspule (4G; 4H; 4I; 4J) die Hauptachse in einer ersten Richtung ausgerichtet haben und in einer Richtung der Nebenachse benachbart zueinander angeordnet sind, und die dritte und die vierte Heizspule (4K; 4L) die Hauptachse in einer zweiten Richtung orthogonal zu der ersten Richtung ausgerichtet haben und in einer Richtung der Nebenachse benachbart zueinander angeordnet sind, und
der erste Wechselrichter so konfiguriert ist, dass er einen Hochfrequenzstrom an die erste und zweite Heizspule (4G; 4H; 4I; 4J) liefert, und der zweite Wechselrichter so konfiguriert ist, dass er einen Hochfrequenzstrom an die dritte und vierte Heizspule (4K; 4L) liefert,
**dadurch gekennzeichnet, dass**
der Induktionsherd (20D) umfasst außerdem eine weitere Heizspuleneinheit (5G) mit einer weiteren Heizspule (4M) und einem weiteren Wechselrichter,
die andere Heizspule (4M) neben der zweiten Heizspuleneinheit (5F) angeordnet ist und in der Draufsicht eine elliptische Form mit einer Hauptachse und einer Nebenachse aufweist,
wobei die dritte Heizspule (4K), die vierte Heizspule (4L) und die weitere Heizspule (4M) in einer Richtung der Nebenachse nebeneinander angeordnet sind,
wobei die andere Heizspirale (4M) mit dem anderen Wechselrichter verbunden ist, der sich von dem ersten und dem zweiten Wechselrichter unterscheidet, und
wobei der andere Wechselrichter von dem Steuergerät (9) gesteuert wird und so konfiguriert ist, dass er den Hochfrequenzstrom an die andere Heizspule (4M) liefert.

2. Induktionsherd (20D) nach Anspruch 1,
bei dem die erste Heizspuleneinheit (5D; 5E) neben der dritten Heizspule (4K) in der zweiten Heizspuleneinheit (5F) angeordnet ist.

3. Induktionsherd (20D) nach Anspruch 1,
bei dem die zweite Richtung eine Tiefenrichtung der oberen Platte (1) ist.

4. Induktionsherd (20D) nach Anspruch 1,
bei dem die erste Heizspuleneinheit (5D; 5E) eine erste Schalteinheit aufweist, die zwischen der ersten Heizspule (4G; 4I) und dem ersten Wechselrichter vorgesehen ist, und eine zweite Schalteinheit, die zwischen der zweiten Heizspule (4H; 4J) und dem ersten Wechselrichter vorgesehen ist, und
die zweite Heizspuleneinheit (5F) eine dritte Schalteinheit aufweist, die zwischen der dritten Heizspule (4K) und dem zweiten Wechselrichter vorgesehen ist, und eine vierte Schalteinheit, die zwischen der vierten Heizspule (4L) und dem zweiten Wechselrichter vorgesehen ist.

5. Induktionsherd (20D) nach Anspruch 1,
bei dem die erste Heizspuleneinheit (5D; 5E) einen Temperatursensor (7D; 7F) aufweist, der zwischen der ersten Heizspule (4G; 4I) und der zweiten Heizspule (4H; 4J) vorgesehen ist, und
die zweite Heizspuleneinheit (5F) einen Temperatursensor (7G) aufweist, der zwischen der dritten Heizspule (4K) und der vierten Heizspule (4L) vorgesehen ist.

6. Induktionsheizherd (20D) nach Anspruch 1, der ferner eine dritte Heizspuleneinheit (5H; 5I) umfasst, die neben der zweiten Heizspuleneinheit (5F) unterhalb der oberen Platte (1) vorgesehen ist und von der Steuerung (9) gesteuert wird,
wobei die dritte Heizspuleneinheit (5H; 5I) eine fünfte Heizspule (4N; 4P), eine sechste Heizspule (4O; 4Q) und einen dritten Wechselrichter aufweist,
die fünfte und sechste Heizspirale (4N bis 4Q) haben in der Draufsicht eine elliptische Form mit einer Hauptachse und einer Nebenachse,
die fünfte und die sechste Heizspule (4N bis 4Q) die Hauptachse in der ersten Richtung ausgerichtet haben und in Richtung der Nebenachse nebeneinander angeordnet sind, und
der dritte Wechselrichter so konfiguriert ist, dass er die fünfte und sechste Heizspule (4N bis 4Q) mit einem Hochfrequenzstrom versorgt.

7. Induktionsherd (20D) nach Anspruch 6,
bei dem die dritte Heizspuleneinheit (5H; 5I) neben der vierten Heizspule in der zweiten Heizspuleneinheit (5F) angeordnet ist.

8. Induktionsherd (20D) nach Anspruch 6,
bei dem die dritte Heizspuleneinheit (5H; 5I) eine fünfte Schalteinheit aufweist, die zwischen der fünften Heizspule (4N; 4D) und dem dritten Wechselrichter vorgesehen ist, und eine sechste Schalteinheit, die zwischen der sechsten Heizspule (40; 4Q) und dem dritten Wechselrichter vorgesehen ist.

9. Induktionsherd (20D) nach Anspruch 6,
bei dem die dritte Heizspuleneinheit (5H; 5I) einen Temperatursensor (7I; 7K) aufweist, der zwischen der fünften Heizspule (4N; 4P) und der sechsten Heizspule (40; 4Q) vorgesehen ist.

## Revendications

1. Cuisinière à induction (20D) comprenant :
une plaque supérieure (1) sur laquelle est placé un objet à chauffer ;
une première unité de serpentin de chauffage (5D ; 5E) et une deuxième unité de serpentin de chauffage (5F) qui sont disposées adjacentes l'une à l'autre sous la plaque supérieure (1) ; et
un contrôleur (9) configuré pour contrôler la première unité de serpentin de chauffage (5D ; 5E) et la deuxième unité de serpentin de chauffage (5F),
dans laquelle la première unité de serpentin de chauffage (5D ; 5E) comporte un premier serpentin de chauffage (4G ; 4I), un deuxième serpentin de chauffage (4H ; 4J) et un premier onduleur, et la deuxième unité de serpentin de chauffage (5F) comporte un troisième serpentin de chauffage (4K), un quatrième serpentin de chauffage (4L) et un deuxième onduleur,
les premier à quatrième serpentins de chauffage (4G à 4L) ont une forme elliptique ayant un grand axe et un petit axe dans une vue en plan,
les premier et deuxième serpentins de chauffage (4G ; 4H ; 4I ; 4J) ont le grand axe orienté dans une première direction et sont disposés adjacents l'un à l'autre dans une direction du petit axe, et les troisième et quatrième serpentins de chauffage (4K ; 4L) ont le grand axe orienté dans une deuxième direction orthogonale à la première direction et sont disposés adjacents l'un à l'autre dans une direction du petit axe, et
le premier onduleur est configuré pour fournir un courant à haute fréquence aux premier et deuxième serpentins de chauffage (4G ; 4H ; 4I ; 4J), et le deuxième onduleur est configuré pour fournir un courant à haute fréquence aux troisième et quatrième serpentins de chauffage (4K ; 4L),
**caractérisée en ce que**
la cuisinière à induction (20D) comprend en outre une autre unité de serpentin de chauffage (5G) comprenant un autre serpentin de chauffage (4M) et un autre onduleur,
l'autre serpentin de chauffage (4M) est disposé adjacent à la deuxième unité de serpentin de chauffage (5F), et a la forme elliptique ayant le grand axe et le petit axe dans une vue en plan,
dans laquelle le troisième serpentin de chauffage (4K), le quatrième serpentin de chauffage (4L) et l'autre serpentin de chauffage (4M) sont disposés adjacents l'un à l'autre dans une direction du petit axe,
dans laquelle l'autre serpentin de chauffage (4M) est connecté à l'autre onduleur différent du premier onduleur et du deuxième onduleur, et
dans laquelle l'autre onduleur est contrôlé par le contrôleur (9), et est configuré pour fournir le courant à haute fréquence à l'autre serpentin de chauffage (4M).

2. Cuisinière à induction (20D) selon la revendication 1,
dans laquelle la première unité de serpentin de chauffage (5D ; 5E) est prévue adjacente au troisième serpentin de chauffage (4K) dans la deuxième unité de serpentin de chauffage (5F).

3. Cuisinière à induction (20D) selon la revendication 1,
dans laquelle la deuxième direction est une direction de profondeur de la plaque supérieure (1).

4. Cuisinière à induction (20D) selon la revendication 1,
dans laquelle la première unité de serpentin de chauffage (5D ; SE) comporte une première unité de commutation prévue entre le premier serpentin de chauffage (4G ; 4I) et le premier onduleur et une deuxième unité de commutation prévue entre le deuxième serpentin de chauffage (4H ; 4J) et le premier onduleur, et
la deuxième unité de serpentin de chauffage (5F) comporte une troisième unité de commutation prévue entre le troisième serpentin de chauffage (4K) et le deuxième onduleur et une quatrième unité de commutation prévue entre le quatrième serpentin de chauffage (4L) et le deuxième onduleur.

5. Cuisinière à induction (20D) selon la revendication 1,
dans laquelle la première unité de serpentin de chauffage (5D ; 5E) comporte un capteur de température (7D ; 7F) prévu entre le premier serpentin de chauffage (4G ; 4I) et le deuxième serpentin de chauffage (4H ; 4J), et
la deuxième unité de serpentin de chauffage (5F) comporte un capteur de température (7G) prévu entre le troisième serpentin de chauffage (4K) et le quatrième serpentin de chauffage (4L).

6. Cuisinière à induction (20D) selon la revendication 1, comprenant en outre une troisième unité de serpentin de chauffage (5H ; 5I) qui est prévue adjacente à la deuxième unité de serpentin de chauffage (5F) sous la plaque supérieure (1) et est contrôlée par le contrôleur (9), dans laquelle la troisième unité de serpentin de chauffage (5H ; 5D) comporte un cinquième serpentin de chauffage (4N ; 4P), un sixième serpentin de chauffage (4O ; 4Q) et un troisième onduleur,
les cinquième et sixième serpentins de chauffage (4N à 4Q) ont la forme elliptique ayant le grand axe et le petit axe dans une vue en plan,
les cinquième et sixième serpentins de chauffage (4N à 4Q) ont le grand axe orienté dans la première direction et sont disposés adjacents l'un à l'autre dans une direction du petit axe, et
le troisième onduleur est configuré pour fournir un courant à haute fréquence aux cinquième et sixième serpentins de chauffage (4N à 4Q).

7. Cuisinière à induction (20D) selon la revendication 6,
dans laquelle la troisième unité de serpentin de chauffage (5H ; 5I) est prévue adjacente au quatrième serpentin de chauffage dans la deuxième unité de serpentin de chauffage (5F).

8. Cuisinière à induction (20D) selon la revendication 6,
dans laquelle la troisième unité de serpentin de chauffage (5H ; 5I) comporte une cinquième unité de commutation prévue entre le cinquième serpentin de chauffage (4N ; 4D) et le troisième onduleur et une sixième unité de commutation prévue entre le sixième serpentin de chauffage (4O ; 4Q) et le troisième onduleur.

9. Cuisinière à induction (20D) selon la revendication 6,
dans laquelle la troisième unité de serpentin de chauffage (5H ; 5I) comporte un capteur de température (7I ; 7K) disposé entre le cinquième serpentin de chauffage (4N ; 4P) et le sixième serpentin de chauffage (4O ; 4Q).
